Europäisches Patentamt

European Patent Office

Office européen des brevets

(19)

(11) Publication number: **0 200 889**
A2

## EUROPEAN PATENT APPLICATION

(21) Application number: 86103486.6

(22) Date of filing: 14.03.86

(51) Int. Cl.⁴: **H 01 S 3/101, H 01 S 3/107**

(30) Priority: 18.03.85 IT 4782585

(71) Applicant: **SELENIA INDUSTRIE ELETTRONICHE ASSOCIATE S.p.A., Via Tiburtina, KM 12.400, I-00131 Roma (IT)**

(43) Date of publication of application: **12.11.86 Bulletin 86/46**

(72) Inventor: **Benedetti Michelangeli, Glauco, via dei Frassini 34, I-Ariccia (Roma) (IT)**
Inventor: **Giuliani, Giampiero, via Padova 65, I-Roma (IT)**
Inventor: **Penco, Eugenio, Via Bevignani 12, I-Roma (IT)**

(84) Designated Contracting States: **AT BE CH DE FR GB LI NL SE**

(74) Representative: **Gustorf, Gerhard, Dipl.-Ing., Mühlenstrasse 1, D-8300 Landshut (DE)**

(54) **Electro-optical deviator for a laser.**

(57) Optical deviator consisting of two or more mirrors (M₁, M₂) which reflect totally each incident polarization, an electrooptical phase modulator PC and a polarizer P which can modulate at high speed and rate, high power laser radiations having whatever polarization distribution.

**PATENTANWALT**

**DIPL.-ING. GERHARD GUSTORF**

EUROPEAN PATENT ATTORNEY

MÜHLENSTRASSE 1
D-8300 LANDSHUT

Telefon Büro:   08 71 / 8 93 71
Privat:   08 71 / 2 57 19

0200889

PA 1 705 EP

SELENIA Industrie Elettroniche Associate S.p.A.
Via Tiburtina km 12.400
Rome, Italy

TITLE MODIFIED
see front page

---

Eletrooptical deviator which can modulate high power laser radiations, having whatever polarisation distribution, at very high speed and rate

---

## Description

This invention concerns an electrooptical deviator which can modulate high power laser radiations at whatever polarisation distribution, at very high speed and rate.

The invention fits the electrooptical frame, in particular that of fast non polarized monochrone light modulators.

It can find applications in active optical systems (lasers) and in passive systems (optical signal processors).

Previous solutions may be classified as belonging to three types:

1) mechanooptical
2) acousticoptical
3) electrooptical.

- 2 -

These solutions can modulate and/or deviate non polarized light beams, albeit with the limitations reported in the following.

1. The mechano optical solution, due to its inertia moments, is unsuitable for fast modulations.

2. The acoustic optical solution although capable of providing switching times shorter than the mechano optical, due to the low propagation speed of sound, cannot provide very fast switching and it is also virtually impossible to obtain 100% amplitude modulation.

3. Existing electrooptical modulators, although very fast, can modulate only polarized light radiation.

The invention herein proposes to solve the inconveniences described by means of a unique electrooptical configuration which provides:

a) fast switching times
b) almost 100% modulation amplitude
c) application of light radiation having whatever polarisation distribution.

The invention will now be described in its preferred configuration, as an illustrative example, but not confined to it, based upon the figures attached, where the modulator, which is the subject of the invention and can be recognized by the dotted line enclosure, is used as a variable reflectivity output mirror for a laser cavity.

Here:

$M_2$, $M_3$ are the modulator mirrors
PC is the electrooptical phase modulator (e.g. a Packel cell)
P is the polarizer (e.g. of the Mac Neillo type)
O is the output direction
N is the active means
M is the totally reflective cavity mirror.

In the optical configuration proposed, the radiation coming from optical means N may be described as a combination of two orthogonal polarizations. The radiation, striking polarizer P splits into two orthogonally polarized beams.

The one transmitted by polarizer $M_2$, reflected by $M_2$ and phase shifted by phase modulator PC, further reflected by $M_3$, strikes polarizer P again with a polarization distribution which depends upon the voltage applied to phase modulator PC. The beam reflected by polarizer P covers the same optical path in the opposite direction returning, after striking $M_3$, crossing PC, reflected by $M_2$, onto polarizer P with a polarization distribution which also and in the same manner, depends on the voltage applied to modulator PC. If the voltage applied to the phase modulator is zero, the beams transmitted and reflected strike the polarizer again with the same polarization, therefore they will be transmitted and reflected respectively by the polarizer towards output O. In this case, the deviator sends the whole radiation coming from N to output O, acting as a mirror having null equivalent reflectivity.

If the voltage ($V_\pi$) applied to the modulator is equal to a $\pi$ phase shift, the transmitted and reflected beams strike the polarizer with inverted polarization, therefore they will be reflected and transmitted toward active means N. In this case the deviator reflects the whole radiation coming from N back to M, acting as a mirror having the equivalent reflectivity 1 (total).

Clearly, for intermediate voltages applied to the phase modulator PC, the electroopical deviator has intermediate reflectivities between 0 and 1.

When the voltage applied to phase modulator PC varies between 0 und $V_\pi$ rapidly, the electrooptical deviator shows an equivalent reflectivity which varies in time at the same speed between 0 and 1.

As can be understood from the description, the proposed electrooptical deviator can provide very fast modulation (reflection-transmission) of the high power laser radiation with whatsoever polarization distribution.

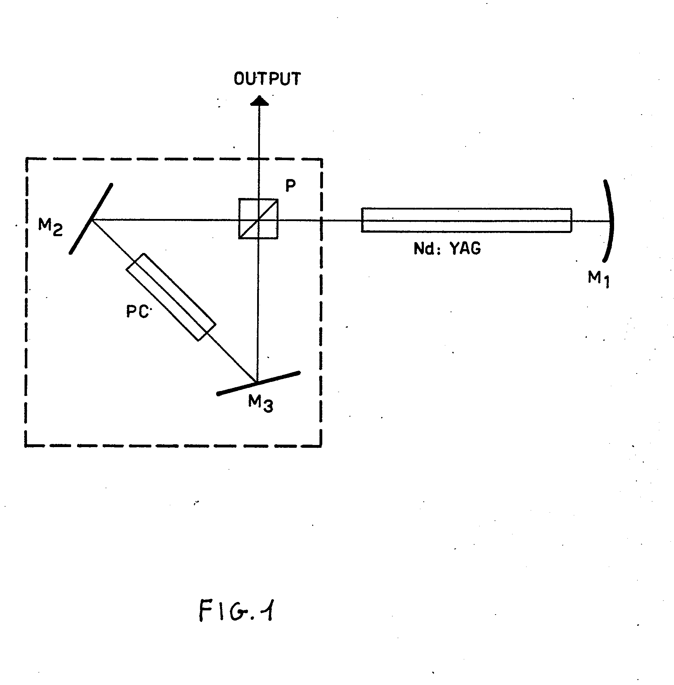

The laser device shown in Figure 1 con provide an output laser radiation considerably more powerful than what can be achieved with modultors in existence.

0200889

## Claims

1.   Electrooptical deviator to be preferably used with laser radiations, characterized by including a polarizer P, one or  more
phase modulators PC, two or more reflecting mirrors $M_1$, $M_2$.

2.   Electrooptical deviator as claimed in claim 1, characterized
by the fact that polarizer P, simultaneously divides and  combines both polarizations of the incident radiation.

FIG.1